# EUROPÄISCHE PATENTSCHRIFT

(11) **EP 1 085 220 B1**
(45) Veröffentlichungstag und Bekanntmachung des Hinweises auf die Patenterteilung: **06.10.2004**
(21) Anmeldenummer: 00118713.7
(22) Anmeldetag: 30.08.2000
(51) Int. Cl.: F16B 35/00, F16B 35/04, F16B 23/00, B25B 23/10

(54) **Bolzenanker**
Anchor bolt
Boulon d'ancrage

(30) Priorität: 15.09.1999 DE 19944217
(43) Veröffentlichungstag der Anmeldung: 21.03.2001
(73) Patentinhaber: Adolf Würth GmbH & Co. KG, 74653 Künzelsau (DE)
(72) Erfinder: Steck, Otto, 74679 Forchtenberg (DE)
(74) Vertreter: Patentanwälte Ruff, Wilhelm, Beier, Dauster & Partner

(56) Entgegenhaltungen:
- EP-A- 0 356 019
- EP-A- 0 763 665
- US-A- 4 652 193

## Beschreibung

Zur Befestigung von Gegenständen an Wänden, Decken oder dergleichen sind Bolzenanker bekannt. Diese enthalten in vielen Fällen eine metallische Hülse, die in ein vorgebohrtes Loch eingesetzt wird, sowie einen Spreizkörper, der nur einen kleinen Teil der Hülse zur deren Verankerung aufspreizt. Die Aufspreizung geschieht beispielsweise mit Hilfe von Spezialwerkzeugen oder aber durch Festziehen einer Schraube oder einer Mutter (EP 142 625 A). Da die Hülse aus festem Metall besteht, können Bolzenanker dieser Art zur Befestigung schwerer Lasten verwendet werden. Wegen der Verwendung von Aufspreizelementen können diese Bolzenanker aber nur selten in solchen Bereichen des Mauerwerks verwendet werden, wo das Mauerwerk unter Zugbeanspruchung steht.

Der Erfindung liegt die Aufgabe zugrunde, einen Bolzenanker zu schaffen, der verbesserte Anwendungsbedingungen bietet.

Es ist bereits ein Bolzenanker mit einem Betongewinde bekannt (EP-A1-356019). Bei diesem Bolzenanker reicht das Gewinde nicht bis zu der Stelle des Ankers, die nach dem Einschrauben des Ankers bündig mit der Wandoberfläche verläuft.

Ebenfalls bekannt ist ein Klebeanker (US - 4652193), der mit Hilfe eines Werkzeugs drehend in ein vorher mit einer Klebepatrone versehenes Bohrloch eingebracht wird. Das Werkzeug bildet keine Anschlagbegrenzung zur Definition der Einschraubtiefe.

Zur Lösung dieser Aufgabe schlägt die Erfindung einen Bolzenanker mit den Merkmalen des Anspruchs 1 sowie ein Setzwerkzeug mit den im Anspruch 8 genannten Merkmalen vor. Weiterbildungen der Erfindung sind Gegenstand der abhängigen Ansprüche, deren Wortlaut ebenso wie der Wortlaut der Zusammenfassung durch Bezugnahme zum Inhalt der Beschreibung gemacht wird.

Der Bolzenanker wird in das Bohrloch eingeschraubt. Betongewinde sind bei Betonschrauben an sich bekannt. Betonschrauben haben einen einstückig angeformten Schraubenkopf, mit dem sie durch den zu befestigenden Gegenstand in das Bohrloch eingeschraubt werden. Ein Beispiel für eine Betonschraube ist in der nachveröffentlichten deutschen Patentanmeldung 199 17 469 gezeigt.

Der Bolzenanker hat den Vorteil, dass er nicht nur auch in Zugzonen verwendet werden kann, sondern dass nach seinem Setzen der Gegenstand an ihm angebracht und auch wieder abgenommen werden kann.

Erfindungsgemäß kann in Weiterbildung vorgesehen sein, dass das metallische Bolzenelement eine Innenbohrung aufweist, die von der äußeren Stirnseite des Bolzenelements ausgeht. Bei dieser Innenbohrung kann es sich um ein Sackloch handeln, aber auch, je nach Anwendungsfall, um ein durchgehendes Loch.

Diese Innenbohrung bildet ein Teil der Halterungseinrichtung zum Anbringen des zu befestigenden Gegenstandes. Beispielsweise kann die Innenbohrung ein Gewinde aufweisen.

Die Innenbohrung kann nicht nur zur Befestigung des Gegenstands herangezogen werden, sondern auch dazu, die zum Einschrauben des Bolzenelements erforderlichen Drehmomente aufzunehmen.

Erfindungsgemäß kann in Weiterbildung auch vorgesehen sein, dass in axialer Verlängerung des Bolzenelements ein Gewindebolzen angeordnet ist, dessen Außendurchmesser kleiner ist als der Durchmesser des Bolzenelements. In eine Innenbohrung kann eine Schraube eingeschraubt werden. Wenn man aber einen Gegenstand, der ein Loch hat, auf einen Gewindebolzen aufsetzen will, kann man dies nach diesem Merkmal der Erfindung ebenso tun. Auf den Gewindebolzen kann dann beispielsweise eine Mutter zur Festlegung aufgeschraubt werden.

Der Gewindebolzen kann ggf. nachträglich mit dem Bolzenelement verbunden werden. Es ist jedoch ebenfalls möglich und wird von der Erfindung vorgeschlagen, dass der Gewindebolzen mit dem Bolzenelement vor dessen Einsetzen in die Bohrung verbunden, insbesondere unlösbar verbunden wird.

Insbesondere ist es auch möglich, dass der Gewindebolzen ein einstückiges Teil des Bolzenelements ist.

Das zum Setzen des Bolzenankers verwendete Werkzeug enthält eine Anlageschulter, mittels der es an der äußeren Stirnseite des Bolzenelements anliegen kann, sowie eine Mitnahmeeinrichtung, um das Bolzenelement bei der Drehung mitzunehmen. Die Anlageschulter dient dazu, zu verhindern, dass das Werkzeug zu tief in die Innenbohrung eingreift.

Die Einrichtung zur Drehmitnahme wirkt in Weiterbildung der Erfindung mit dem Gewinde der Innenbohrung und/oder mit dem Gewinde des Gewindebolzens zusammen.

Beispielsweise enthält das Werkzeug einen auf die Innenbohrung abgestimmten Gewindebolzen, auf den der Bolzenanker vor seinem Setzen aufgeschraubt wird. Damit kann das Werkzeug auch dazu dienen, den Bolzenanker in das Bohrloch einzuführen.

In nochmaliger Weiterbildung der Erfindung kann vorgesehen sein, dass die die Anlageschulter bildende Fläche des Werkzeugs einen größeren Außendurchmesser aufweist als das Betongewinde des Bolzenelements. Damit wirkt die Schulter gleichzeitig als Anschlagfläche, die das Einschrauben des Bolzenelements in das Bohrloch begrenzt. Das Bolzenelement wird genau so weit eingeschraubt, wie dies gewünscht ist, d.h. bis seine äußere Stirnfläche mit der Oberfläche der Wand bündig verläuft.

Weitere Merkmale, Einzelheiten und Vorzüge der Erfindung ergeben sich aus der folgenden Beschreibung einer bevorzugten Ausführungsform der Erfindung sowie anhand der Zeichnung. Hierbei zeigen:
- Fig. 1: eine teilweise geschnittene Seitenansicht eines Bolzenankers nach der Erfindung;
- Fig. 2: eine Seitenansicht eines Werkzeugs zum Setzen dieses Bolzenankers;
- Fig. 3: eine der Fig. 1 entsprechende Seitenansicht eines Bolzenankers nach einer zweiten Ausführungsform.

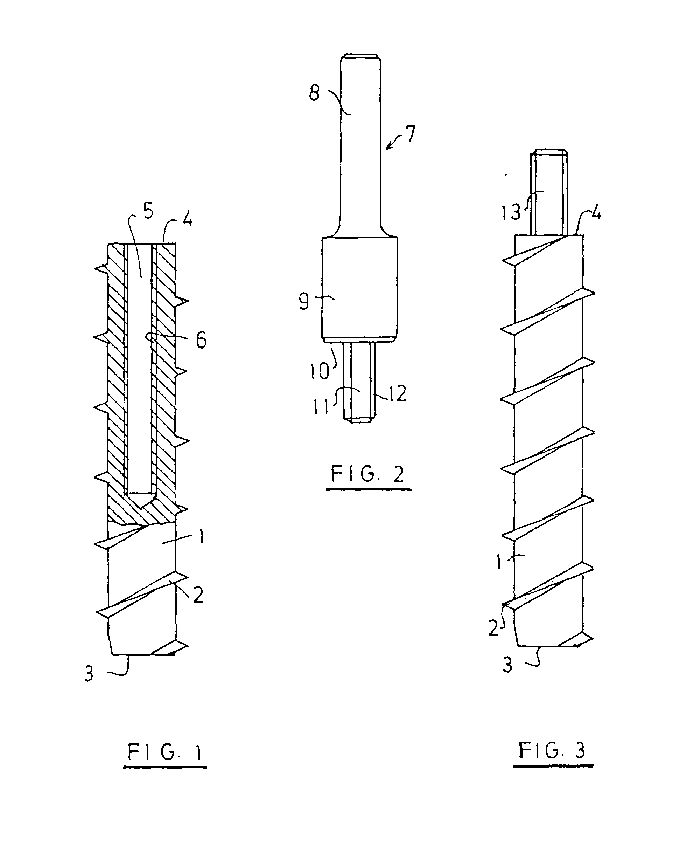

Figur 1 zeigt in einer teilweise geschnittenen Seitenansicht einen Bolzenanker nach der Erfindung. Der Bolzenanker enthält ein massives metallisches Bolzenelement 1, das etwa Zylinderform aufweist. An seiner Außenseite enthält das Bolzenelement ein Betongewinde 2, d.h. ein Gewinde, das dazu dient, in die Wand des Bohrlochs eine schraubenlinienförmige Kerbe einzugraben. Betongewinde sind an sich bekannt.

Das Betongewinde 2 erstreckt sich von dem in das Innere des Bohrlochs gerichteten vorderen Ende 3 über die gesamte Länge des Bolzenelements 1 bis zu der äußeren Stirnfläche 4.

Von dieser Stirnfläche 4 aus geht eine Sacklochbohrung 5 koaxial in das Bolzenelement 1 hinein. Die Sacklochbohrung 5 ist mit einem angedeutetem Innengewinde 6 versehen.

Zum Einsetzen des in Figur 1 dargestellten Bolzenankers dient das in Figur 2 dargestellte Werkzeug 7. Es enthält einen Schaft 8, mit dem es in eine Aufnahme einer Bohrmaschine oder dergleichen eingesetzt werden kann. Diese Bohrmaschine oder ein anderer Motor dient zum Drehantrieb des Werkzeugs 7.

An den Schaft 8 schließt sich ein Abschnitt 9 mit einem vergrößerten Durchmesser an, der auf der dem Antrieb abgewandten freien Seite eine Schulterfläche 10 bildet. Mittig in der Schulterfläche 10 ragt aus dieser ein Gewindebolzen 11 heraus, der ein dem Innengewinde 6 der Innenbohrung 5 des Bolzenelements 1 entsprechendes Außengewinde 12 aufweist. Mit diesem Gewindebolzen 11 kann das Werkzeug in die Innenbohrung 5 des Bolzenelements 1 eingeschraubt werden. Anders ausgedrückt, kann das Bolzenelement 1 auf den Gewindebolzen 11 des Werkzeugs 7 aufgeschraubt werden. Das Aufschrauben geschieht soweit, bis die Schulterfläche 10 an der äußeren Stirnfläche 4 des Bolzenelements 1 zur Anlage gelangt.

Das in Figur 1 dargestellte Element wird folgendermaßen gesetzt. Zunächst wird in der üblichen Weise ein Bohrloch der entsprechenden Tiefe in einer Wand oder einer Decke gebohrt. Der Bolzenanker wird auf den Gewindebolzen 11 des Werkzeugs 7 aufgeschraubt, wobei das Werkzeug 7 mit seinem Schaft 8 in einem Antrieb aufgenommen ist. Anschließend wird das Bolzenelement in die Mündung des Bohrlochs eingedrückt und der Antrieb betätigt. Das Bolzenelement 1 wird in das Bohrloch eingeschraubt, wobei das Betongewinde 2 sich die Kerbe gräbt. Der Vorschub unter Drehbewegung geschieht so lange, bis die Schulterfläche 10, deren Außendurchmesser größer ist als das Bohrloch, an der Oberfläche der Wand anliegt. Falls der Monteur diesen Zeitpunkt nicht bemerkt, wird er dadurch darauf aufmerksam gemacht, dass sich der Widerstand für den Antrieb stark erhöht. Dies kann beispielsweise durch eine Drehmomentkupplung festgestellt werden. Anschließend wird das Werkzeug 7 angehalten und danach in umgekehrtem Drehsinn angetrieben, so dass sich jetzt das Werkzeug von dem gesetzten Bolzenelement 1 löst. In die Innenbohrung 5 kann nun eine Schraube oder auch ein Gewindestift eingeschraubt werden, je nach dem Anwendungsfall.

Figur 3 zeigt eine Seitenansicht eines Bolzenelements, bei dem aus der äußeren Stirnfläche 4 ein Gewindebolzen 13 herausragt, der beispielsweise ein einstückiges Teil des Bolzenelements 1 ist. Ein Werkzeug, das dieses Bolzenelement einschraubt, würde ähnlich aussehen wie das Werkzeug 7 in Figur 2, aber anstelle des Gewindebolzens 11 eine Bohrung mit einem Innengewinde aufweisen.

## Patentansprüche

1. Bolzenanker, mit
1.1 einem metallischen Bolzenelement (1), das
1.1.1 zum Einsetzen in eine Bohrung einer Wand bestimmt ist und
1.1.2 im wesentlichen zylindrisch geformt ist,
1.2 einer Halterungseinrichtung zum Anbringen eines Gegenstandes an dem Bolzenelement (1), sowie mit
1.3 einem Betongewinde (2) an der Außenseite des Bolzenelements (1),
**dadurch gekennzeichnet, dass**
1.4 das Betongewinde (2) sich über die gesamte Länge des Bolzenelements (1) bis zu der äußeren Stirnfläche (4) erstreckt.

2. Bolzenanker nach Anspruch 1, mit einer von der äußeren Stirnseite (4) des Bolzenelements (1) ausgehenden Innenbohrung (5).

3. Bolzenanker nach Anspruch 2, bei dem die Innenbohrung (5) ein Gewinde (6) aufweist.

4. Bolzenanker nach Anspruch 2 oder 3, bei dem die Innenbohrung (5) ein Sackloch ist.

5. Bolzenanker nach einem der vorhergehenden Ansprüche, mit einem in axialer Verlängerung des Bolzenelements (1) angeordneten Gewindebolzen (13), dessen Außendurchmesser kleiner als der Durchmesser des Bolzenelements (1) ist.

6. Bolzenanker nach Anspruch 5, bei dem der Gewindebolzen (13) mit dem Bolzenelement (1) vor dessen Einsetzen in die Bohrung verbunden ist, insbesondere unlösbar.

7. Bolzenanker nach Anspruch 5 oder 6, bei dem der Gewindebolzen (13) einstückig mit dem Bolzenelement (1) ausgebildet ist.

8. Werkzeug zum Setzen eines Bolzenankers nach einem der vorhergehenden Patentansprüche, mit
8.1 einem Schaft (8) zum Verbinden mit einem Antrieb,
8.2 einer Anlageschulter (10) zur Anlage an der äußeren Stirnseite (4) des Bolzenelements (1), sowie mit
8.3 einer Mitnahmeeinrichtung zur Drehmitnahme des Bolzenelements (1),
**dadurch gekennzeichnet, dass**
8.4 die die Anlageschulter (10) bildende Fläche des Werkzeugs einen größeren Außendurchmesser aufweist als das Betongewinde (2) des Bolzenelements (1).

9. Werkzeug nach Anspruch 8, bei dem die Drehmitnahme mit dem Gewinde (6) der Innenbohrung (5) und/oder mit dem Gewinde des Gewindebolzens (13) zusammenwirkt.

10. Werkzeug nach Anspruch 8 oder 9, mit einem in das Gewinde (6) der Innenbohrung (5) eingreifenden Gewindebolzen (11).

## Claims

1. Anchor bolt, with
1.1 a metal bolt element (1), that
1.1.1 is intended for inserting into a hole in a wall, and
1.1.2 that is essentially cylindrical,
1.2 with a holder to affix objects to the bolt element (1) and with
1.3 a cement thread (2) on the outside of the bolt element (1),
**characterized in that**
1.4 the cement thread (2) extends the entire length of the bolt element (1) up to the outer face (4).

2. Anchor bolt according to claim 1, with an inner thread (5) extending from the outer face (4) of the bolt element (1).

3. Anchor bolt according to claim 2, wherein the inner hole (5) has a thread (6).

4. Anchor bolt according to claim 2 or 3, wherein the inner hole (5) is a blind hole.

5. Anchor bolt according to one of the previous claims, with a threaded bolt (13) in an axial extension of the bolt element (1) whose outer diameter is smaller than the diameter of the bolt element (1).

6. Anchor bolt according to claim 5, wherein the threaded bolt (13) is connected preferably permanently to the bolt element (1) before it is inserted into the hole.

7. Anchor bolt according to claim 5 or 6, wherein the threaded bolt (13) forms a single piece with the bolt element (1).

8. Tool to set an anchor bolt according to one of the previous patent claims, with
8.1 a shaft (8) to be connected with a drive,
8.2 a shoulder stop (10) to contact the outer face (4) of the bolt element (1), and with
8.3 a catch to carry along the bolt element (1),
**characterized in that**
8.4 the surface of the tool forming the shoulder stop (10) has a larger outer diameter than the cement thread (2) of the bolt element (1).

9. Tool according to claim 8, wherein the catch interacts with the thread (6) of the inner hole (5) and/or with the thread of the threaded bolt (13).

10. Tool according to claim 8 or 9, with a threaded bolt (11) that mates with the thread (6) of the inner hole (5).

## Revendications

1. Un boulon d'ancrage avec
1.1 un élément de boulon métallique (1), qui
1.1.1 est destiné à être introduit dans un perçage mural, et
1.1.2 dont la forme essentielle est cylindrique,
1.2 un dispositif de support pour la mise en place d'un objet sur l'élément de boulon (1), ainsi qu'avec
1.3 un filetage à béton (2) sur l'extérieur de l'élément de boulon (1),
**caractérisé par le fait que**
1.4 le filetage à béton (2) s'étend sur toute la longueur de l'élément de boulon (1) jusqu'à la face frontale externe (4).

2. Un boulon d'ancrage conforme à la revendication 1, avec un perçage interne (5) débutant sur la face frontale externe (4) de l'élément de boulon (1).

3. Un boulon d'ancrage conforme à la revendication 2, où le perçage interne (5) présente un filetage (6).

4. Un boulon d'ancrage conforme à la revendication 2 ou 3, où le perçage (5) est un trou borgne.

5. Un boulon d'ancrage conforme à une des revendications précédentes, avec une tige filetée (13) de prolongation axiale de l'élément de boulon (1) dont le diamètre externe est inférieur au diamètre de l'élément de boulon (1).

6. Un boulon d'ancrage conforme à la revendication 5, où la tige filetée (13) reçoit une liaison permanente avec l'élément de boulon (1) avant l'introduction de ce dernier dans le perçage mural.

7. Un boulon d'ancrage conforme à la revendication 5 ou 6, où la tige filetée (13) est faite d'une seule pièce avec l'élément de boulon (1).

8. Un outil de montage du boulon d'ancrage, conforme à l'une des revendications d'invention précédentes, avec
8.1 une queue (8) de liaison à un entraînement,
8.2 un épaulement d'appui (10) pour l'appui sur la face frontale (4) de l'élément de boulon (1), ainsi qu'un
8.3 dispositif d'entraînement pour l'entraînement en rotation de l'élément de boulon (1),
**caractérisé par le fait que**
8.4 la surface formant l'épaulement d'appui (10) de l'outil possède un diamètre externe supérieur à celui du filetage à béton (2) de l'élément de boulon (1).

9. Un outil conforme à la revendication 8, où l'entraînement de rotation est réalisé à l'aide du filetage (6) du perçage interne (5) et/ou à l'aide du filetage de la tige filetée (13).

10. Un outil conforme à la revendication 8 ou 9, avec une tige filetée (11) qui est introduite dans le filetage (6) du perçage interne (5).
